# EUROPEAN PATENT APPLICATION

(11) **EP 4 372 956 A1**
(43) Date of publication of application: **22.05.2024**
(21) Application number: 23208078.8
(22) Date of filing: 06.11.2023
(51) Int. Cl.: H02J 7/00, H01M 10/42

(54) **POWER CONVERSION SYSTEM, ENERGY STORAGE SYSTEM AND POWER SUPPLY METHOD**

(30) Priority: 10.11.2022 CN 202211405467
(71) Applicant: Sungrow Power Supply Co., Ltd., Hefei, Anhui 230088 (CN)
(72) Inventor: DENG, Kai, Hefei, Anhui (CN); LI, Le, Hefei, Anhui (CN); DONG, Hao, Hefei, Anhui (CN); ZHENG, Feiyang, Hefei, Anhui (CN)
(74) Representative: Zacco Norway AS

(57) **Abstract**

A power conversion system, an energy storage system and a power supply method are provided. The power conversion system includes a battery management system and an auxiliary power supply. A positive electrode of the auxiliary power supply is connected to a positive electrode of a battery rack. The auxiliary power supply is configured to obtain power from the battery rack, convert the power obtained from the battery rack, and supply the converted power to the battery management system and a load in the power conversion system. The battery management system is configured to sample a voltage of the battery rack and a current of the battery rack, and control charging and discharging of the battery rack based on the voltage and the current.

## Description

### FIELD

The present disclosure relates to the technical field of new energy, in particular to a power conversion system, an energy storage system and a power supply method.

### BACKGROUND

A power conversion system (PCS) is for realizing conversion of charging and discharging of a battery. A conventional energy storage system includes a battery, a switch box and a power conversion system.

The battery is mainly for energy storage and release. The switch box generally includes a shunt, a fuse, a contactor, a load switch and a battery management system (RACK BMS). The battery management system is for energy management at a battery rack level, voltage sampling and current sampling, and communication with the power conversion system. In addition, the battery management system controls close of a main internal contactor. The switch box includes an auxiliary power supply, which is configured to supply power to the battery management system. A direct current side of the power conversion system generally includes a slow-starting circuit, a bus capacitor and an auxiliary power supply. The auxiliary power supply in the power conversion system obtains power from a port of the power conversion system. Therefore, the auxiliary power supply in the power conversion system can supply power in a case that a positive contactor and a negative contactor of the switch box are switched on.

The auxiliary power supply in the switch box operates ceaselessly to supply power to the battery management system, so that operation of the battery management system is guaranteed. The switch box occupies a certain space in the power conversion system, resulting in that architecture of the power conversion system is not simplified.

### SUMMARY

In view of this, a power conversion system, an energy storage system, and a power supply method are provided according to the present disclosure, in order to realize a simplified architecture of the energy storage system.

A power conversion system is provided according to an embodiment of the present disclosure. The power conversion system includes a battery management system and an auxiliary power supply. A positive electrode of the auxiliary power supply is connected to a positive electrode of a battery rack. The auxiliary power supply is configured to obtain power from the battery rack, convert the power obtained from the battery rack, and supply power to the battery management system and a load in the power conversion system. The battery management system is configured to sample a voltage of the battery rack and a current of the battery rack, and control charging and discharging of the battery rack based on the voltage and the current.

Preferably, the power conversion system further includes a positive fuse, a negative fuse, and a load switch. A first terminal of the positive fuse is connected to the positive electrode of the battery rack, a first terminal of the negative fuse is connected to a negative electrode of the battery rack. A first sub-switch of the load switch is connected in series between a second terminal of the positive fuse and a positive electrode of a direct-current bus capacitor. A second sub-switch of the load switch is connected in series between a second terminal of the negative fuse and a negative electrode of the direct-current bus capacitor. A negative electrode of the auxiliary power supply is connected to a negative electrode of the load switch.

Preferably, the power conversion system further includes a main contactor, where the main contactor is connected in series between the positive fuse and the first sub-switch of the load switch.

Preferably, the power conversion system further includes a first slow-starting circuit. The first slow-starting circuit and the main contactor are connected in parallel to each other, and the first slow-starting circuit includes a slow-starting contactor and a slow-starting resistor, which are connected in series.

Preferably, the power conversion system further includes a shunt connected in series between the positive fuse and the main contactor.

Preferably, the positive fuse is in a quantity of more than one, and the battery rack is in a quantity of more than one, and the positive fuses and the battery racks are in one-to-one correspondence. a positive electrode of one of the battery racks is connected to the first sub-switch of the load switch via a corresponding one of the positive fuses, and negative electrodes of the battery racks are connected to each other and are connected to the second sub-switch of the load switch via a common negative fuse.

Preferably, the power conversion system further includes a second slow-starting circuit. The second slow-starting circuit is connected in series between the second sub-switch of the load switch and the negative electrode of the direct-current bus capacitor.

Preferably, the power conversion system further includes a main contactor. The main contactor and the second slow-starting circuit are connected in series.

An energy storage system is further provided according to an embodiment of the present disclosure. The energy storage system includes the power conversion system as described above and at least one battery rack. The at least one battery rack is connected to an input terminal of the power conversion system.

A method for supplying power to a battery management system in a power conversion system is further provided according to an embodiment of the present disclosure. The power conversion system includes a battery management system and an auxiliary power supply. The method includes: obtaining, through the auxiliary power supply, power from a battery rack; and supplying power from the auxiliary power supply to the battery management system.

Beneficial effects of the present disclosure are described below.

In the power conversion system according to the present disclosure, the auxiliary power supply is disposed merely in the power conversion system, and it is not necessary to provide the auxiliary power supply for the battery rack. The auxiliary power supply is configured to obtain power directly from a positive electrode of the battery rack, supply power to the battery management system ceaselessly, and supply power to a controller in the power conversion system. In this way, the number of auxiliary power supplies is reduced and a hardware architecture of the energy storage system is simplified. Since the auxiliary power supply is configured to obtain power from the battery rack ceaselessly, it is unnecessary to set a contactor for the auxiliary power supply, so that the number of hardware devices is further reduced.

### BRIEF DESCRIPTION OF THE DRAWINGS

Figure 1 is a schematic diagram of a power conversion system according to an embodiment of the present disclosure;
Figure 2 is a schematic diagram of a power conversion system according to another embodiment of the present disclosure;
Figure 3 is a schematic diagram of a power conversion system according to another embodiment of the present disclosure; and
Figure 4 is a schematic diagram of an energy storage system according to another embodiment of the present disclosure.

### DETAILED DESCRIPTION OF EMBODIMENTS

Hereinafter the embodiments of the present disclosure are described in further detail in combination with the drawings and specific implementations, in order to make the above objective, features and advantages of the present disclosure more obvious and understandable.

A power conversion system according to an embodiment includes an auxiliary power supply. The auxiliary power supply is disposed in the power conversion system. The auxiliary power supply is configured to supply power to a battery management system in the power conversion system. The power conversion system is provided with no switch box, and the battery management system is integrated inside a cabinet for the power conversion system. In addition, no auxiliary power supply is provided for a battery rack. The battery management system is powered by the auxiliary power supply in the power conversion system, rather than an auxiliary power supply for the battery rack as in the conventional technology. Moreover, the auxiliary power supply in the power conversion system may be further configured to supply power to a load in the power conversion system. Therefore, merely one, rather than two, auxiliary power supply is disposed. Thereby, the hardware architecture is simplified, and a volume of the energy storage system is reduced.

Since merely one auxiliary power supply is disposed, the auxiliary power supply is configured to supply power to the battery management system ceaselessly. Therefore, a contactor for the auxiliary power supply, as in the conventional technology, is unnecessary and may be eliminated.

Hereinafter the power conversion system according to the embodiments of the present disclosure is described in detail in conjunction with drawings.

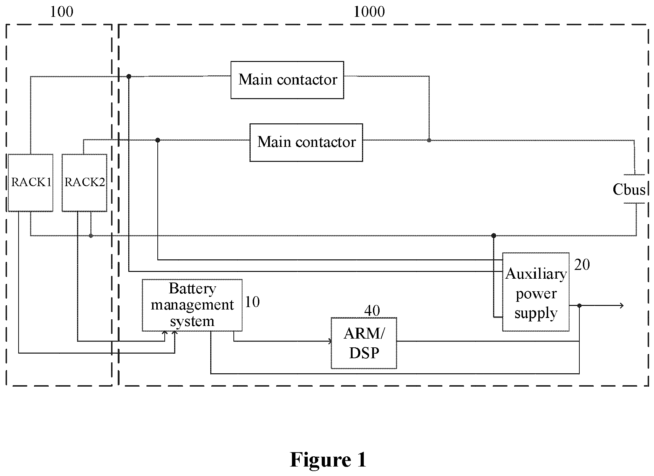

Reference is made to Figure 1, which is a schematic diagram of a power conversion system according to an embodiment of the present disclosure.

In this embodiment of the present disclosure, only architecture and connection of a battery rack and a direct current side of the power conversion system are illustrated for convenience of description.

A power conversion system 1000 according to an embodiment includes a battery management system 10 and an auxiliary power supply 20.

A positive electrode of the auxiliary power supply 20 is connected to a positive electrode of a battery rack. The auxiliary power supply 20 is configured to obtain power from the battery rack, convert the power obtained from the battery rack, and supply the converted power to the battery management system 10 and a load in the power conversion system 1000.

The power conversion system 1000 according to the embodiment of the present disclosure may be applied with one battery rack or two battery racks. An embodiment in which an input terminal of the power conversion system 1000 is connected to two battery racks, namely, a first battery rack RACK1 and a second battery rack RACK2, is described.

The auxiliary power supply 20 is configured to obtain power from one of the two battery racks. For example, the auxiliary power supply 20 is configured to obtain power from the first battery rack RACK1. In this case, the positive electrode of the auxiliary power supply 20 is connected to a positive electrode of the first battery rack RACK1. It should be understood that the auxiliary power supply 20 may be configured to obtain power from the second battery rack RACK2. A negative electrode of the first battery rack RACK1 is connected to a positive electrode of a direct-current bus capacitor Cbus via a slow-starting circuit, and a negative electrode of the second battery rack RACK2 is connected to the positive electrode of the direct-current bus capacitor Cbus via another slow-starting circuit.

The above-mentioned two slow-starting circuits are connected to positive electrodes of the battery racks, and each of the slow-starting circuits is referred to as a first slow-starting circuit.

The battery management system 10 is configured to sample a voltage of a battery rack and a current of the battery rack, and control charging and discharging of the battery rack based on the voltage and the current.

The battery management system 10 is configured to sample a voltage and a current of the first battery rack RACK1, and a voltage and a current of the second battery rack RACK2.

For example, the power conversion system 1000 is compatible with 0.25C/4h charging and discharging. That is, 0.5C charging and discharging of the energy storage system can be realized in a case that merely battery rack is connected, and 0.25C charging and discharging of the energy storage system can be realized in a case that two battery racks are connected. Therefore, the power conversion system 1000 has a strong compatibility.

In an example, the battery management system 10 is configured to detect SOC values of the battery racks, and controls charging and discharging of branches. Thereby, an SOC balance of remaining power of the battery racks is realized, and a barrel effect is reduced.

In addition, the auxiliary power supply 20 is further configured to supply power to a controller in the power conversion system 1000. For example, the controller in the power conversion system 1000 includes ARM/DSP 40.

The battery management system 10 is further configured to communicate with the ARM/DSP 40 to receive an instruction and report information of charging and discharging.

The power conversion system 1000 is connected to the battery rack. Therefore, the battery rack may be provided with no auxiliary power supply. The power conversion system 1000 is provided with only one auxiliary power supply in the power conversion system. The auxiliary power supply is configured to obtain power directly from a positive electrode of the battery rack, supply power to the battery management system ceaselessly, and supply power to the controller in the power conversion system. In this way, the number of auxiliary power supplies is reduced and the hardware architecture of the energy storage system is simplified. Since the auxiliary power supply 20 is configured to obtain power from the battery rack ceaselessly, it is unnecessary to set a contactor for the auxiliary power supply, so that the number of hardware devices is further reduced.

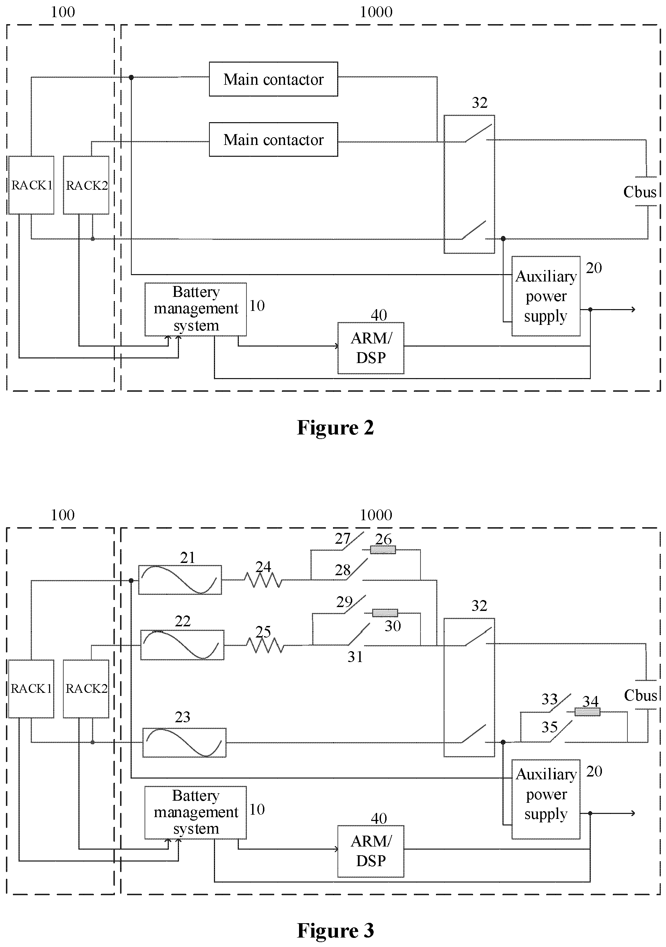

Reference is made to Figure 2, which is a schematic diagram of a power conversion system according to another embodiment of the present disclosure.

The power conversion system according to this embodiment of the present disclosure further includes a load switch 32.

The load switch 32 is connected with a slow-starting circuit and the direct-current bus capacitor Cbus. In addition, the load switch 32 is connected with another slow-starting circuit and the direct-current bus capacitor Cbus. That is, the load switch 32 is connected downstream of a connection point of the two battery racks. In this way, the two battery racks can be disconnected from the direct-current bus capacitor by using one load switch 32. That is, in a case that the load switch 32 is switched off, both the first battery cluster RACK1 and the second battery cluster RACK2 are disconnected from the direct-current bus capacitor Cbus.

The negative electrode of the auxiliary power supply 20 is configured to obtain power from the negative electrode of the battery rack through the load switch 32. That is, the negative electrode of the auxiliary power supply 20 is connected between the load switch 32 and the direct-current bus capacitor Cbus, and is connected downstream of the load switch 32.

The negative electrode of the auxiliary power supply 20 is connected downstream of the load switch 32, so that the auxiliary power supply 20 can be powered off as the load switch 32 is switched off during operation and maintenance, which further ensures that the battery management system 10 is powered off. Therefore, the circuit is prevented from being energized during operation and maintenance, and safety during the operation and maintenance is ensured.

In a case that the negative electrode of the auxiliary power supply 20 is connected upstream of the load switch 32, switch-off of the load switch during operation and maintenance cannot ensure that the auxiliary power supply 20 is powered off, which results in a potential risk to the operation and maintenance.

In order to ensure safety of the circuit, the power conversion system according to an embodiment of the present disclosure further includes a fuse and a shunt, which is described in detail below in combination with the drawings.

Reference is made to Figure 3, which is a schematic diagram of a power conversion system according to another embodiment of the present disclosure.

The power conversion system according to this embodiment further includes a positive fuse and a negative fuse.

A first terminal of the positive fuse is connected to the positive electrode of the battery rack, and a first terminal of the negative fuse is connected to the negative electrode of the battery rack.

A first sub-switch of the load switch is connected in series between a second terminal of the positive fuse and a positive electrode of a direct-current bus capacitor.

A second sub-switch of the load switch is connected in series between a second terminal of the negative fuse and a negative electrode of the direct-current bus capacitor.

According to an embodiment, the power conversion system further includes a main contactor connected in series between the positive fuse and the first sub-switch of the load switch. In addition, the power conversion system further includes a first slow-starting circuit. The first slow-starting circuit and the main contactor are connected in parallel to each other.

The positive slow-starting circuit includes a slow-starting contactor and a slow-starting resistor, which are connected in series.

In addition, the power conversion system further includes a shunt connected in series between the positive fuse and the first slow-starting circuit. The shunt is configured to sample a current, i.e., to perform current sampling.

Multiple positive fuses and multiple battery racks are in one-to-one correspondence.

A positive electrode of one of the battery racks is connected to the first sub-switch of the load switch via a corresponding one of the positive fuses. Negative electrodes of the battery racks are connected to each other, and are connected to the second sub-switch of the load switch via a common negative fuse.

The following description is made by taking an example in which the power conversion system 1000 is connected to two battery racks.

Each of the battery racks corresponds to one fuse, one shunt, one slow-starting circuit, and one main contactor.

A positive electrode of the first battery rack RACK1 is connected to the first sub-switch of the load switch 32 through a fuse 21, a shunt 24 and a first slow-starting circuit. It should be understood that each of a positive electrode and a negative electrode of the load switch corresponds to a sub-switch.

In addition, each branch further includes a main contactor. The first battery rack RACK1 corresponds to a main contactor 28. The main contactor 28 and a first slow-starting circuit are connected in parallel with each other. The first slow-starting circuit includes a slow-starting contactor 27 and a slow-starting resistor 26, which are connected in series.

A positive electrode of the second battery rack RACK2 is connected to the first sub-switch of the load switch 32 through a fuse 22, a shunt 25 and another first slow-starting circuit.

In addition, the second battery rack RACK2 corresponds to a main contactor 31. The main contactor 31 and the another slow-starting circuit are connected in parallel with each other. The another slow-starting includes a slow-starting contactor 29 and a slow-starting resistor 30, which are connected in series.

It should be understood that the slow-starting circuit is for mitigating an impact of an impulse current on devices due to start of the energy storage system. After the energy storage system is successfully slow-started, the slow-starting circuit may stop operating, that is, the main contactor is switched on and the slow-starting contactor is switched off. Thereby, additional power consumption caused by the slow-starting resistor is avoide.

An power conversion system according to an embodiment of the present disclosure further includes a main contactor 35 and a second slow-starting circuit. The main contactor 35 is connected in series between the second sub-switch of the load switch and the negative electrode of the direct-current bus capacitor. The second slow-starting circuit and the main contactor 35 are connected in parallel with each other. As shown in Figure 3, the second slow-starting circuit includes a slow-starting contactor 33 and a slow-starting resistor 34, which are connected in series. The slow-starting contactor 33 is switched on during a slow starting. After the slow starting succeeds, the slow-starting contactor 33 is switched off and the main contactor 35 is switched on.

In addition, a fuse 23 is connected between the second sub-switch of the load switch 32 and the negative electrode of the first battery rack RACK1.

The negative electrode of the auxiliary power supply 20 is connected between the second sub-switch of the load switch 32 and the main contactor 35.

Based on the power conversion system according to the above embodiments, an energy storage system is further provided according to an embodiment of the present disclosure, which is described in detail below in combination with the drawings.

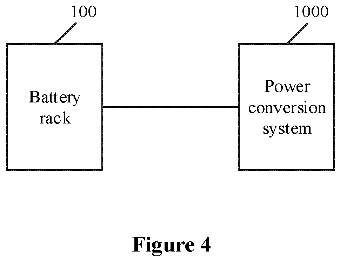

Reference is made to figure 4, which is a schematic diagram of an energy storage system according to an embodiment of the present disclosure.

The energy storage system according to this embodiment includes the power conversion system 1000 according to the above embodiments and at least one battery rack 100. The at least one battery rack 100 is connected to an input terminal of the power conversion system 1000.

It should be understood that the power conversion system 1000 can realize charging and discharging of the battery rack 100. The power conversion system 1000 can convert power from the battery rack 100 and feed the converted power to a grid, and can charge the battery rack 100 with the power from the grid appropriately.

The power conversion system according to the embodiments of the present disclosure includes only one auxiliary power supply, and therefore has a simplified internal structure. Therefore, a volume of the energy storage system is reduced. Additionally, as the number of hardware circuits is reduced, the reliability is improved.

Based on the power conversion system and the energy storage system according to the above embodiments, a method for supplying power to a battery management system in a power conversion system is further provided according to an embodiment of the present disclosure. The power conversion system includes a battery management system and an auxiliary power supply. The method includes: obtaining, through the auxiliary power supply, power from a battery rack; and supplying power from the auxiliary power supply to the battery management system. That is, with the method provided in the embodiment of the present disclosure, the battery management system is disposed in the power conversion system, and the battery management system is powered by the auxiliary power supply in the power conversion system. The auxiliary power supply obtains power directly from the positive electrode of the battery rack. Therefore, it is not necessary to dispose an additional auxiliary power supply or a contactor connected to the additional auxiliary power supply, so that cost is reduced.

It should be noted that embodiments in this specification are described in a progressive manner. Each of the embodiments focuses on differences with other embodiments, and the same and similar parts of the embodiments can be referred to each other. Description of the system and apparatus disclosed in the embodiments is brief, as the system and apparatus correspond to the method disclosed in the embodiments. Reference may be made to corresponding description of the method for details of the system and apparatus.

With the above description of the disclosed embodiments, those skilled in the art can implement or use the present disclosure. It is obvious for those skilled in the art to make many modifications to these embodiments. The general principle defined herein may be applied to other embodiments without departing from the spirit or scope of the present disclosure. Therefore, the present disclosure is not limited to the embodiments illustrated herein, but should be defined by the widest scope consistent with the principle and novel features disclosed herein.

## Claims

1. A power conversion system, comprising a battery management system and an auxiliary power supply, wherein
a positive electrode of the auxiliary power supply is connected to a positive electrode of a battery rack,
the auxiliary power supply is configured to obtain power from the battery rack, convert the power obtained from the battery rack, and supply the converted power to the battery management system and a load in the power conversion system; and
the battery management system is configured to sample a voltage of the battery rack and a current of the battery rack, and control charging and discharging of the battery rack based on the voltage and the current.

2. The power conversion system according to claim 1, further comprising a positive fuse, a negative fuse, and a load switch, wherein
a first terminal of the positive fuse is connected to the positive electrode of the battery rack,
a first terminal of the negative fuse is connected to a negative electrode of the battery rack;
a first sub-switch of the load switch is connected in series between a second terminal of the positive fuse and a positive electrode of a direct-current bus capacitor;
a second sub-switch of the load switch is connected in series between a second terminal of the negative fuse and a negative electrode of the direct-current bus capacitor; and
a negative electrode of the auxiliary power supply is connected to a negative electrode of the load switch.

3. The power conversion system according to claim 2, further comprising a main contactor, wherein
the main contactor is connected in series between the positive fuse and the first sub-switch of the load switch.

4. The power conversion system according to claim 3, further comprising a first slow-starting circuit, wherein
the first slow-starting circuit and the main contactor are connected in parallel to each other, and
the first slow-starting circuit comprises a slow-starting contactor and a slow-starting resistor, which are connected in series.

5. The power conversion system according to claim 3, further comprising a shunt connected in series between the positive fuse and the main contactor.

6. The power conversion system according to any one of claims 2 to 4, wherein:
the positive fuse is in a quantity of more than one, and the battery rack is in a quantity of more than one,
the positive fuses and the battery racks are in one-to-one correspondence,
a positive electrode of one of the battery racks is connected to the first sub-switch of the load switch via a corresponding one of the positive fuses, and
negative electrodes of the battery racks are connected to each other and are connected to the second sub-switch of the load switch via a common negative fuse.

7. The power conversion system according to any one of claims 2 to 4, further comprising a second slow-starting circuit, wherein
the second slow-starting circuit is connected in series between the second sub-switch of the load switch and the negative electrode of the direct-current bus capacitor.

8. The power conversion system according to claim 7, further comprising a main contactor, wherein
the main contactor and the second slow-starting circuit are connected in series.

9. An energy storage system, comprising:
the power conversion system according to any one of claims 1 to 8; and
at least one battery rack connected to an input terminal of the power conversion system.

10. A method for supplying power to a battery management system in a power conversion system, wherein the power conversion system comprises a battery management system and an auxiliary power supply, and the method comprises:
obtaining, through the auxiliary power supply, power from a battery rack; and
supplying power from the auxiliary power supply to the battery management system.
